(19) **Europäisches Patentamt European Patent Office Office européen des brevets**

(11) **EP 3 035 620 B1**

(12) **EUROPEAN PATENT SPECIFICATION**

(45) Date of publication and mention
of the grant of the patent:
**06.02.2019 Bulletin 2019/06**

(51) Int Cl.:
$H04B\ 7/04$ $^{(2017.01)}$     $H04B\ 7/0408$ $^{(2017.01)}$
$H04B\ 7/0491$ $^{(2017.01)}$     $H04B\ 7/06$ $^{(2006.01)}$
$H04L\ 25/02$ $^{(2006.01)}$     $H04L\ 25/03$ $^{(2006.01)}$

(21) Application number: **14307026.6**

(22) Date of filing: **15.12.2014**

(54) **Method and apparatus to mitigate pilot power contamination in large scalable antenna systems**

Verfahren und Vorrichtung zur Verringerung der Pilotleistungsverunreinigung in großen skalierbaren Antennensystemen

Procédé et appareil pour limiter la contamination de puissance pilote dans de grands systèmes d'antenne extensible

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.06.2016 Bulletin 2016/25**

(73) Proprietor: **Alcatel Lucent**
**91620 Nozay (FR)**

(72) Inventors:
- **Lopez-Perez, David**
  **DUBLIN (IE)**
- **Venkateswaran, Vijay**
  **DUBLIN (IE)**
- **Claussen, Holger**
  **DUBLIN (IE)**

(74) Representative: **Mooij, Maarten et al**
**Alcatel-Lucent**
**Intellectual Property Business Group**
**Lorentzstraße 10**
**70435 Stuttgart (DE)**

(56) References cited:
**WO-A2-2015/053986**     **US-A1- 2012 288 022**

- HUALEI WANG ET AL: "A spatial domain based method against pilot contamination for multi-cell massive MIMO systems", 2013 8TH INTERNATIONAL CONFERENCE ON COMMUNICATIONS AND NETWORKING IN CHINA (CHINACOM), IEEE, 14 August 2013 (2013-08-14), pages 218-222, XP032546686, DOI: 10.1109/CHINACOM.2013.6694594 [retrieved on 2013-12-24]
- ADHIKARY ANSUMAN ET AL: "Joint Spatial Division and Multiplexing for mm-Wave Channels", IEEE JOURNAL ON SELECTED AREAS IN COMMUNICATIONS, IEEE SERVICE CENTER, PISCATAWAY, US, vol. 32, no. 6, 1 June 2014 (2014-06-01), pages 1239-1255, XP011554187, ISSN: 0733-8716, DOI: 10.1109/JSAC.2014.2328173 [retrieved on 2014-07-22]
- HIEN QUOC NGO ET AL: "Analysis of the pilot contamination effect in very large multicell multiuser MIMO systems for physical channel models", ACOUSTICS, SPEECH AND SIGNAL PROCESSING (ICASSP), 2011 IEEE INTERNATIONAL CONFERENCE ON, IEEE, 22 May 2011 (2011-05-22), pages 3464-3467, XP032001457, DOI: 10.1109/ICASSP.2011.5947131 ISBN: 978-1-4577-0538-0

EP 3 035 620 B1

• KOUNTOURIS MARIOS ET AL: "HetNets and massive MIMO: Modeling, potential gains, and performance analysis", 2013 IEEE-APS TOPICAL CONFERENCE ON ANTENNAS AND PROPAGATION IN WIRELESS COMMUNICATIONS (APWC), IEEE, 9 September 2013 (2013-09-09), pages 1319-1322, XP032500949, DOI: 10.1109/APWC.2013.6624936 [retrieved on 2013-10-08]

**Description**

FIELD OF THE INVENTION

The present invention relates to a method and apparatus to mitigate pilot contamination in Large Scalable Antenna Systems.

BACKGROUND OF THE INVENTION

This section introduces aspects that may be helpful in facilitating a better understanding of the invention. Accordingly, the statements of this section are to be read in this light and are not to be understood as admission about what is in the prior art.

In Large Scalable Antenna Systems (LSAS), also known as Massive MIMO or Very Large MIMO, a large excess of antenna elements are used over active terminals, and time division duplex (TDD) operation is employed. This differentiates Large Scalable Antenna Systems from current Multiple Input Multiple Output (MIMO) systems.

Both factors together help to exploit transmit/receive diversity, beam-forming and spatial multiplexing with a larger degree of freedom and the resulting increase in network capacity. Other benefits of Large Scalable Antenna Systems include the extensive use of inexpensive low-power components, reduced latency, simplification of the media access control (MAC) layer, and robustness to intentional jamming. However, while Large Scalable Antenna Systems render many traditional research problems irrelevant, pilot power contamination is an unsolved problem.

In Large Scalable Antenna Systems, an orthogonal uplink pilot sequence is assigned to any active terminal in order to allow Channel State Information (CSI) estimation by exploiting the downlink/uplink channel reciprocity of TDD systems. The maximum number of orthogonal uplink pilot sequences available is upper-bounded by the duration of the coherence interval divided by the channel delay-spread. For a typical operating scenario, the maximum number of orthogonal uplink pilot sequences in a one millisecond coherence interval is estimated to be about 200. In Long Term Evolution (LTE) systems, the number of Sounding Reference Signals (SRSs) is much less. Thus, in a multi-cellular system, the available orthogonal uplink pilot sequences are exhausted.

One solution is to re-use uplink pilot sequences from one cell to another. This implicates other problems such as "pilot contamination". When an antenna-array correlates its received pilot signal with the uplink pilot sequence associated with a particular active terminal, it actually obtains a Channel State Information that is contaminated by a linear combination of channels to the other active terminals that share the same uplink pilot sequence. For example, downlink beam-forming based on contaminated Channel State Information results in interference that is directed to those active terminals that share the same pilot sequence. Similar interference is associated with uplink transmissions of data.

In the art, some methods to deal with pilot contamination exist.

The allocation of uplink pilot sequences can be optimized. One possibility is to use a less-aggressive frequency re-use factor for the pilots (but not necessarily for the payload data) - say 3 or 7. This pushes mutually-contaminating cells farther apart. It is also possible to coordinate the use of pilots or adaptively allocate pilot sequences to the different terminals in the network, as disclosed by H. Yin, D. Gesbert, M. Filippou, and Y. Liu, "A coordinated approach to channel estimation in large-scale multiple-antenna systems," IEEE J. Sel. Areas Commun., vol. 31, no. 2, pp. 264-273, Feb. 2013. Currently, the optimal strategy is unknown. Similar approaches are currently used in LTE for the allocation of Sounding Reference Signals to User Equipment (UE).

Specific Channel State Information estimation algorithms as disclosed by R. Müller, M. Vehkaperä, and L. Cottatellucci, "Blind pilot decontamination," in Proc. of ITG Workshop on Smart Antennas, Stuttgart, Mar. 2013, or even blind techniques that circumvent the use of pilots altogether as disclosed by H. Q. Ngo and E. G. Larsson, "EVD-based channel estimations for multi-cell multiuser MIMO with very large antenna arrays," in Proceedings of the IEEE International Conference on Acoustics, Speed and Signal Processing (ICASSP), Mar. 2012, may mitigate or eliminate the effects of pilot contamination. A promising direction seems to be blind techniques that jointly estimate the channels and the payload data.

New pre-coding techniques that consider the network structure, such as pilot contamination pre-coding disclosed by A. Ashikhmin and T. L. Marzetta, "Pilot contamination pre-coding in multi-cell large scale antenna systems," in IEEE International Symposium on Information Theory (ISIT), Cambridge, MA, Jul.

2012, can utilize cooperative transmission over a multiplicity of cells to nullify, at least partially, the directed interference that results from pilot contamination. Unlike coordinated beam-forming over multiple cells, which requires Channel State Information estimates of the actual channels between the terminals and the service-arrays of the contaminating cells, pilot-contamination pre-coding requires only the corresponding slow-fading coefficients. Practical schemes remain to be developed.

All the above described methods do not seem to provide a fully satisfying solution to pilot contamination and suffer from various problems.

The article "A spatial domain based method against pilot contamination for multi-cell massive MIMO systems" by Wang et al., 8th International Conference on Communications and Networking in China (2013), describes a suboptimal spatial domain method which uses a predetermined angular-tunable narrow beam pattern to match a desired user. In the method, first a narrow beam using a linear-array massive antenna is generated. Next the beam is used to find a most matched uplink path. Finally, an optimal steering vector is used as a downlink beamformer.

SUMMARY OF THE INVENTION

It is an object of the invention to provide a solution to pilot contamination in Large Scalable Antenna Systems.
According to one embodiment of the invention, a method for Channel State Information estimation in a wireless network is proposed. The wireless network comprises at least one base station. The at least one base station comprises a Large Scalable Antenna System. The Large Scalable Antenna System consists of multiple antenna elements. The antenna elements of the Large Scalable Antenna System are partitioned into sub-arrays. In one embodiment, all sub-arrays contain the same number of antenna elements. In one embodiment, the sub-arrays contain different numbers of antenna elements. In one embodiment, all antenna elements of a sub-array are neighboring antenna elements. In one embodiment, the antenna elements of a sub-array are not neighboring antenna elements, i.e. they are not arranged continuously. Precoding vectors are generated for each sub-array such that the antenna beams of the sub-arrays point to different directions. At least one uplink pilot sequence is received by at least one antenna sub-array. A Channel State Information for the at least one antenna sub-array is estimated based on the received pilot sequence. This has the advantage that reuse of uplink pilot signals is possible without significant signal contamination. According to one embodiment, an enhanced Channel State Information for the Large Scalable Antenna System is generated from the at least one sub-array Channel State Information.
According to one embodiment, the precoding vectors for each sub-array are generated such that the beams of the sub-arrays cover mutually exclusive areas. This enhances the effect to reduce pilot contamination.
According to one embodiment, the sub-arrays are arranged such that the minimum distance between any two antenna elements of one sub-array is maximized. This leads to a distribution of antenna elements of one sub-array which enhances reliability of the overall Large Scalable Antenna System.
According to one embodiment, the received Channel State Information for at least one antenna sub-array is extrapolated to the Large Scalable Antenna System by exploiting a priori information about the channel properties between antenna elements of the Large Scalable Antenna System and time shift information.
According to one embodiment, for estimating the enhanced, i.e. high resolution Channel State Information of the Large Scalable Antenna System, a generic sub-array Channel State Information pattern is obtained by combining the estimated sub-array Channel State Information with the antenna array geometry. Enhanced Channel State Information is generated based on the sub-array Channel State Information pattern and beam-patterns.
According to one embodiment, the sub-array Channel State Information estimates are projected over the space spanned by the antenna elements of the Large Scalable Antenna System. A Eigen decomposition of a matrix generated in the projection step is performed. The enhanced Channel State Information is generated by cross-correlating the Eigen decomposition with the pilot signals.
According to one embodiment, sub-antenna arrays and precoding vectors are arranged such that multiple orthogonal antenna beams pointing in different directions are generated. Pilot signal reusability is increased by orthogonal antenna beams pointing in different directions.
According to one embodiment, the method is performed in a base station with a Large Scalable Antenna System providing backhaul services to a Small Cell network. The Channel State Information describes the channel state between the Large Scalable Antenna System base station and at least one Small Cell.
According to one embodiment, a base station for wireless communication is proposed. The base station comprises a Large Scalable Antenna System. The Large Scalable Antenna System comprises multiple antenna elements. The antenna elements are arranged in sub-arrays. The base station further comprises a precoder for generating precoding vectors for each sub-array such that the beams of the sub-arrays point to different directions. The base station further comprises a receiver for receiving at least one uplink pilot sequence by at least one antenna sub-array. The base station further comprises a processor for estimating Channel State Information for the sub-arrays from the received pilot sequence in at least one sub-array. According to one embodiment, the base station further comprises a processor for generating an enhanced Channel State Information for the Large Scalable Antenna System from the at least one sub-array Channel State Information.
According to one embodiment, the sub-arrays of the base station are arranged such that the minimum distance between any two antenna elements of one sub-array is maximized.
According to one embodiment, the processor is further for extrapolating the received Channel State Information for at least one antenna sub-array to the Large Scalable Antenna System. Therefore, a priori information about the channel properties between antenna elements of the Large Scalable Antenna System and time shift information are exploited.

According to one embodiment, the processor is further for obtaining a generic sub-array pattern by combining the estimated sub-array Channel State Information with the antenna array geometry.

According to one embodiment, the processor is further for projecting the sub-array Channel State Information estimates over the space spanned by the antenna elements of the Large Scalable Antenna System. Further, the processor is for performing Eigen decomposition of a matrix generated in the projection step. Further, the processor is for generating enhanced Channel State Information by cross-correlating the Eigen decomposition with the pilot signals.

According to one embodiment, the base station provides backhaul services to a Small Cell network. The Channel State Information describes the channel state between the Large Scalable Antenna System base station and at least one Small Cell.

According to one embodiment, a Small Cell communication network is proposed. The Small Cell communication network comprises at least one Small Cell and at least one base station. The base station provides backhaul services to the at least one Small Cell. The base station is a base station as described above.

Further advantageous features of the embodiments of the invention are defined and are described in the following detailed description.

BRIEF DESCRIPTION OF THE DRAWINGS

Some embodiments of apparatus and methods in accordance with embodiments of the present invention are now described, by way of examples only, and with reference to the accompanying drawings, in which:

Fig. 1    depicts a small cell wireless communication network and a corresponding base station

Fig. 2    depicts a method for enhanced Channel State Information estimation according to the Invention

Fig. 3    depicts a Large Scalable Antenna System partitioned in sub-arrays according to a first embodiment of the invention and corresponding antenna beams

Fig. 4    depicts a Large Scalable Antenna System partitioned in sub-arrays according to a second embodiment of the invention

Fig. 5    depicts a Large Scalable Antenna System partitioned in sub-arrays according to a third embodiment of the invention

Fig. 6    depicts a Large Scalable Antenna System partitioned in sub-arrays according to a first embodiment of the invention and corresponding beam switching in time domain

DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

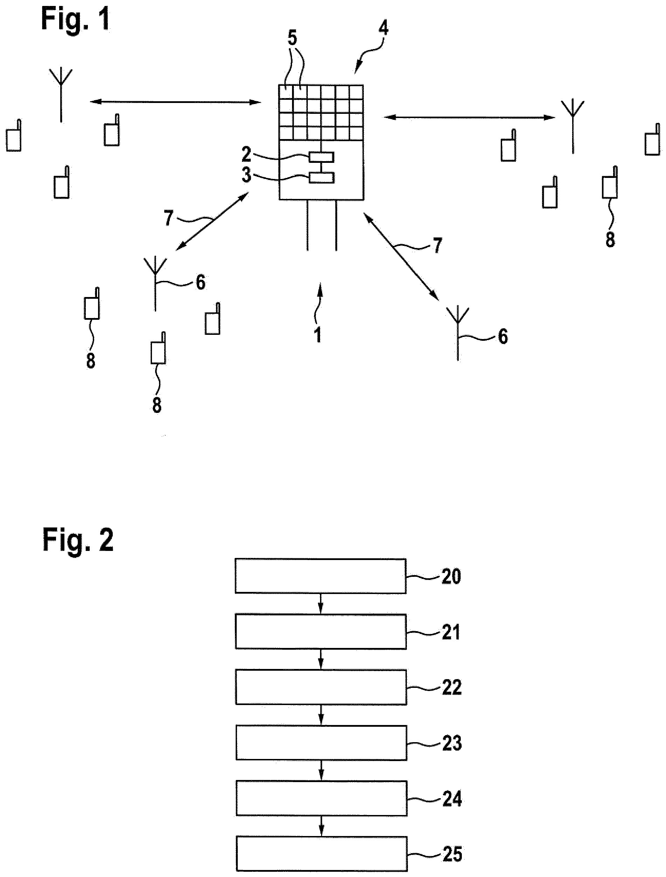

Fig. 1 discloses a small cell network consisting of a base station 1 and multiple Small Cells 6. A Small Cell 6 is to be understood as an area in which wireless data services are provided to User Equipments 8 by a small cell base station. In the following, the expression Small Cell shall include the small cell base station and the functionality provided by the small cell base station. The base station 1 includes a receiver 2 and a processor 3. The base station 1 further includes a Large Scalable Antenna System 4 consisting of multiple antenna elements 5 arranged e.g. in a planar way. The base station 1 is equipped with processing capabilities to operate the Large Scalable Antenna System 4 such that beamforming is possible. Using beamfroming techniques, the Small Cells 6 are served dedicatedly by independent antenna beams. Thus, a wireless backhaul link 7 is provided for the Small Cells 6.

Fig. 2 discloses a method for enhanced Channel State Information estimation according to the invention. The method comprises the steps of partitioning the Large Scalable Antenna Array 4 into sub-arrays (step 20), generating precoding vectors for at least one sub-array (step 21), receiving uplink pilot signals (step 22), estimating Channel State Information for at least one sub-array from the received pilot signals (step 23), extrapolating an enhanced Channel State Information for the Large Scalable Antenna System 4 from the at least one sub-array Channel State Information (step 24) and communicating with at least one terminal based on the enhanced Channel State Information (step 25). The steps are described in further detail in the following.

In step 20, a Large Scalable Antenna System 4 is partitioned into sub-arrays. This is the basis prerequisite to reuse pilot sequences within the base station 1 with a Large Scalable Antenna System 4. The Large Scalable Antenna System 4 is partitioned into multiple antenna sub-arrays such that the antenna elements 5 are divided into mutually exclusive subsets, and the antenna elements 5 of each subset are arrayed together to form a beam pointing in a given direction of space by using corresponding beamforming vectors.

The different generated beams are configured to point in different and mutually exclusive directions of space e.g. targeting different active terminals. In one embodiment, the targeted terminals are not User Equipments 8 but Small Cells 6 station serving the corresponding User Equipments 8. In one embodiment, the combination of all generated beams covers the overall targeted service area of the base station 1 employing the Large Scalable Antenna System 4.

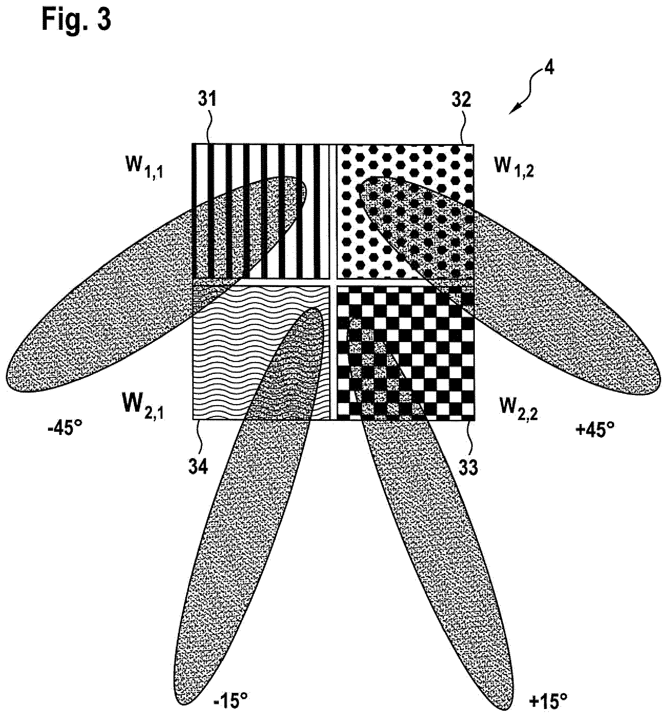

Fig. 3 discloses an example where the antenna elements 5 of the Large Scalable Antenna System 4 are divided into four groups building four sub-arrays 31, 32, 33, 34. By the sub-arrays 31, 32, 33, 34 four antenna beams are created which cover four different and mutually exclusive directions in space. In one embodiment, the exclusive directions in space covered by the antenna may have some overlap. In this case, pilot reuse is not possible in two adjacent areas, but pilot reuse in not adjacent areas is still possible and has benefits. The antenna elements 5 building a sub-array 31, 32, 33, 34 in Fig. 3 cover a contiguous area of the Large Scalable Antenna System 4.

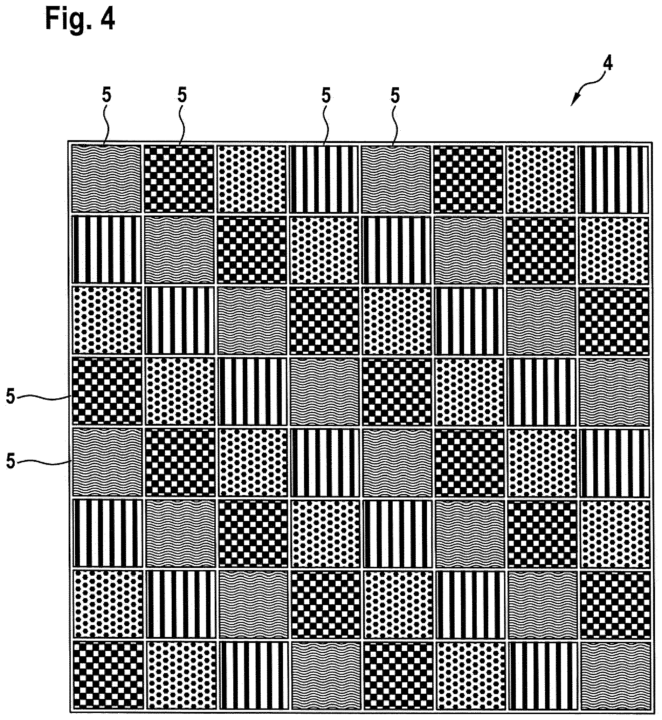

Fig. 4 discloses an example where the antenna elements 5 of the Large Scalable Antenna System 4 are divided into four groups building four sub-arrays which are non-contiguous. The antenna elements 5 of one group are distributed over the whole Large Scalable Antenna System 4. This has the advantage that more robust Channel State Information estimation for each sub-array in presence of multi-path fading is possible, i.e. the situation that one sub-array suffers much more from multi-path fading than other sub-arrays is omitted. According to one embodiment, the sub-arrays are built in a way that the minimum distance between any two antenna elements 5 of the sub-array is maximized.

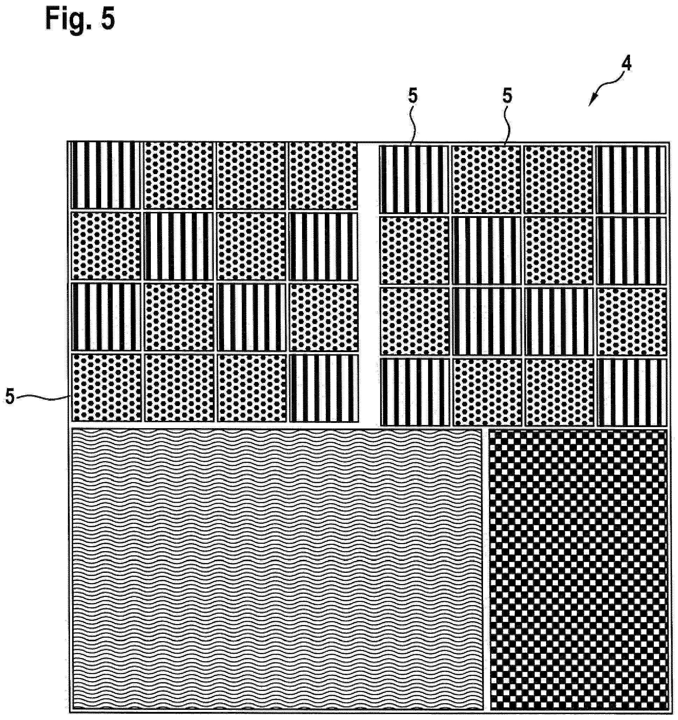

Fig. 5 discloses an example where the antenna elements 5 of the Large Scalable Antenna System 4 are divided into four groups building four sub-arrays which are partly contiguous and partly non-contiguous. The sub-arrays are placed arbitrarily within the Large Scalable Antenna System 4 to account for robust channel estimation in the presence of fading.

Referring back to Fig. 2, in step 21, precoding vectors are generated for at least one sub-array such that the antenna beam of the corresponding sub-array covers the desired area in space.

In step 22, uplink pilot sequences are received. The uplink pilot sequences originate from the terminals, in case of a small cell network they originate from the Small Cells 6 or User Equipments 8 which are directly served by the base station 1. Each antenna beam of each sub-array provides a virtual sectorisation of the overall space. Therefore, the available uplink pilot sequences can be reused in each sector. Pilot contamination among neighboring beams is mitigated due to beam-forming gains.

In step 23, a Channel State Information is estimated for the sub-arrays. The distinct uplink pilot sequences received are used for estimating the Channel State Information between the active terminals and the specific sub-arrays. For each beam, Channel State Information is only estimated for the antenna elements 5 generating the serving beam and not for the antenna elements 5 generating other beams, i.e. Channel State Information is only estimated for antenna elements 5 of the sub-array providing the respective beam. As a result, compared to methods as known in the art, computational effort is reduced. In one embodiment, the sub-array Channel State Information estimation is done by using Least Squares based techniques for a given uplink pilot sequence, antenna sub-array and preconfigured beams. As described previously, the antenna elements 5 of the Large Scalable Antenna System 4 are partitioned in sub-arrays during the Channel State Information acquisition phase. Beamforming vectors are designed such that the sub-arrays form multiple and orthogonal beams pointing in different directions.

The reuse of uplink pilot sequences increases with the number of orthogonal created beams. According to one embodiment, the Large Scalable Antenna System 4 has N$\times$N planar antenna elements array where each antenna element 5 is spaced over a half wavelength spacing $\lambda$/2. This planar antenna array response for a given azimuth $\theta$ and elevation $\phi$ can be modeled as A$(\theta,\phi)$. N is a sufficiently large number, larger than the number of terminals, e.g. small cells 6 to serve. Referring to Fig. 3 as an example only, the panel of N-by-N antenna elements 5 is divided in four arrays of N/2-by-N/2 antenna elements 5 each, i.e. the antenna elements 5 are grouped under mutually exclusive sub-arrays, creating 4 beams pointing in different directions. For illustrative purposes, it is assumed that in each beam thirty available uplink pilot sequences can be reused for channel estimation. Pilot contamination is mitigated due to beam-forming gains.

The planar array divided into four uniform partitions is modeled as

$$\mathbf{A}(\theta,\phi) = \begin{bmatrix} \mathbf{A}_{1,1}(\theta,\phi) & \mathbf{A}_{1,2}(\theta,\phi) \\ \mathbf{A}_{2,1}(\theta,\phi) & \mathbf{A}_{2,2}(\theta,\phi) \end{bmatrix}.$$

where $\mathbf{A}_{1,1}(\theta,\phi)$ is the antenna array response for sub-array $\mathbf{A}_{1,1}$.

These sub-arrays are used in combination with a pre-defined NxN pre-coding matrix $\mathbf{W}$ operating on $\mathbf{A}(\theta,\phi)$ to provide coverage over specific sectors, i.e. to create the beams, where

$$\mathbf{W} = \begin{bmatrix} \mathbf{W}_{1,1} & \mathbf{W}_{1,2} \\ \mathbf{W}_{2,1} & \mathbf{W}_{2,2} \end{bmatrix}.$$

For example, as depicted in Fig. 3, $\mathbf{A}_{1,1}(\theta,\phi)$ is used in combination with $\mathbf{W}_{1,1}$ to provide a good coverage over a sector centered around $\phi = -45°$.

In general, the beam pattern coverage at each sector can be specified by the sub-array beam pattern response:

$$\begin{matrix} \mathbf{W}_{1,1}^{H}\mathbf{A}_{1,1}(\theta,\phi) & \mathbf{W}_{1,2}^{H}\mathbf{A}_{1,2}(\theta,\phi) \\ \mathbf{W}_{2,1}^{H}\mathbf{A}_{2,1}(\theta,\phi) & \mathbf{W}_{2,2}^{H}\mathbf{A}_{2,2}(\theta,\phi) \end{matrix} \qquad \forall \theta, \phi.$$

Consider a sector specified by $\mathbf{A}_{1,1}(\theta,\Phi)$ and $\mathbf{W}_{1,1}$, and let $pi \in p_1, ..., p_{30}$ be the set of pre-defined uplink pilot sequences known at the Large Scalable Antenna System base station. An uplink pilot sequence used in this sector is modulated by the wireless channel, the antenna sub-array response $\mathbf{A}_{1,1}(\theta,\phi)$ and the beam-pattern $\mathbf{W}_{1,1}$. The uplink pilot sequence is received in the base station 1 by the Large Scalable Antenna System 4 as

$$r_i = \sum_{\theta} \sum_{\phi} \mathbf{W}_{1,1}^{H}\mathbf{A}_{1,1}(\theta,\phi)\, h_i\, p_i.$$

where $h_i$ corresponds to the Channel State Information and $n_i$ corresponds to the noise.

The Channel State Information term $h_i$ is the only unknown and can be obtained e.g. by a Least Squares estimate:

$$\hat{h}_i = \left[ \mathbf{W}_{1,1}^{H}\mathbf{A}_{1,1}(\theta,\phi) \right]^{\dagger} r_i \frac{1}{p_i}.$$

For illustrative purposes, the received signals $r_i$ and the pilot sequence $p_i$ are denoted as elements. In general, they should be represented as vectors based on the sequence length. Moreover, a higher resolution sub-array Channel State Information can either be estimated by interpolating $h_i$ or by taking multiple observations and combining them as shown in the above formula.

In step 24, an enhanced, i.e. high resolution Channel State Information for the Large Scalable Antenna System 4 is extrapolated from the Channel State Information estimated for the sub-arrays. According to one embodiment, for all sub-arrays, Channel State Information has been estimated in step 23. This Channel State Information is used to extrapolate enhanced Channel State Information for the Large Scalable Antenna System 4. According to one embodiment, Channel State Information is not estimated for all sub-arrays in step 23, but only for some of them. In step 24, only Channel State Information estimated for some of the sub-arrays is used to extrapolate enhanced Channel State Information for the Large Scalable Antenna System 4. In one embodiment, Channel State Information which is estimated for some of the sub-arrays in step 23 is left unused in step 24 and only Channel State Information for some other sub-arrays is used for step 24.

As the antenna elements 5 of the Large Scalable Antenna System 4 are co-located, the Channel State Information of an active terminal for all antenna elements 5 is derived by exploiting the Large Scalable Antenna System 4 geometry and the sub-array Channel State Information. Thus, the sub-array Channel State Information is extrapolated to the entire Large Scalable Antenna System 4 using a combination of spatial domain and temporal domain techniques.

According to one embodiment, in the spatial domain, sub-arrays are arranged e.g. according to Figs. 4 and 5 as described above and Channel State Information is extrapolated to other sub-arrays.

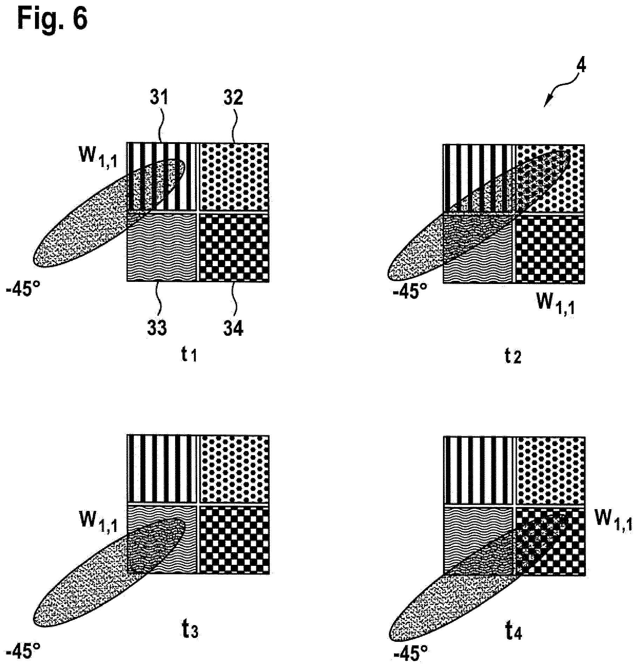

According to one embodiment, beams to one terminal are iteratively switched from different sub-arrays 31, 32, 33, 34 as shown in Fig. 6 to achieve robust Channel State Information. For illustrative purpose only, in Fig. 6, a beam pointing at -45° is shown. The beam originates in different time intervals from different sub-arrays 31, 32, 33, 34.

For both scenarios as described above, the enhanced Channel State Information for the Large Scalable Antenna System 4 is extrapolated as follows.

According to one embodiment, antenna sub-array geometry in spatial domain and in time domain is exploited and invariance property is shifted. A generic sub-array pattern is obtained by combining the estimated sub-array Channel State Information as generated in step 23 with the antenna sub-array geometry and their location in the Large Scalable Antenna System 4 geometry. Beam patterns and sub-array Channel State Information are stacked next to each other according to their location within the Large Scalable Antenna System 4, modulated by a diagonal matrix specifying the antenna sub-array geometry and the weights of pre-specified beams. From this information, the enhanced Channel State Information for the Large Scalable Antenna System 4 is extrapolated.

For illustrative purposes, according to one embodiment, a uniform planar N x N antenna array containing 4 sub-arrays with dimensions N/2 x N/2 is depicted in Fig. 3.

A calibration procedure is used in which the estimated Channel State Information for the sub-array is extrapolated to the other antenna elements 5 by exploiting a priori information about the properties of the channel between different antenna elements 5, as well as time shifted information over such sub-array.

In terms of time domain, according to one embodiment as depicted in Fig. 6, beams are switched between the different sub-arrays 31, 32, 33, 34 such that after a given number of iterations full channel knowledge is achieved. Averaging over time is used to enhance the quality of the estimation. Especially if terminals are Small Cells 6, the terminals are not moving which facilitates the overall process.

As the Large Scalable Antenna System 4 is a uniform planar array $A(\theta,\phi)$ of antenna elements 5, an enhanced (high resolution) Channel State Information hi(high-res) is obtained as

$$h_i(\text{high-res}) = \left[ \{ \mathbf{W}_{1,1}(\text{hi-res})\mathbf{A}(\theta,\phi) \}^\dagger \; r_i \frac{1}{p_i} \right]$$

$$\mathbf{W}_{1,1}(\text{hi-res}) = \begin{bmatrix} \mathbf{W}_{1,1}^H & j\Phi\mathbf{W}_{1,1}^H \\ -j\Phi\mathbf{W}_{1,1}^H & \Phi\mathbf{W}_{1,1}^H \end{bmatrix} .$$

The above approach exploits the specific array geometry of a uniform planar array. According to one embodiment, a generalization of the expression $W_{1,1}(\text{hi-res})A(\theta,\phi)$ as a covariance matrix $R_{1,1} = W_{1,1}(\text{hi-res})A(\theta,\phi)$ is made. Arbitrary rows and columns within $A(\theta,\phi)$ are chosen and account for factors such as multi-path propagation and different capacity and coverage requirements for different sectors. Further, Large Scalable Antenna Systems 4 and sub-arrays not necessarily having a uniform planar array structure are considered with this generalization.

According to one embodiment, enhanced Channel State Information is extrapolated in step 24 based on a covariance matrix. All the sub-array Channel State Information estimates are projected over the space spanned by the entire antenna elements 5 of the Large Scalable Antenna System 4. An Eigen decomposition of the overall projection matrix is performed. Its cross-correlation with pilot signals leads to enhanced Channel State Information for the Large Scalable Antenna System 4.

In step 25 in Fig. 2, based on the enhanced Channel State Information which is extrapolated as described above, the base station 1 operating the Large Scalable Antenna System 4 derives the optimum transmission/reception techniques to serve the underlying active terminals, e.g. Small Cells 6. Different transmission/reception (e.g. beam-forming, spatial multiplexing, etc.) and scheduling (e.g. round robin, proportional fair) techniques are used by the base station 1 to serve the Small Cells 6.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. Method for Channel State Information estimation in a wireless network, the wireless network comprising at least one base station (1), the at least one base station (1) comprising a Large Scalable Antenna System (4) comprising multiple antenna elements (5), the method comprising the steps:

   - partitioning the Large Scalable Antenna System (4) antenna elements (5) in sub-arrays such that the antenna elements are divided into mutually exclusive subsets;
   - generating precoding vectors for each sub-array such that the antenna beams of the sub-arrays point to different directions,
   - receiving at least one uplink pilot sequence by at least one antenna sub-array, and
   - estimate a Channel State Information for the at least one antenna sub-array based on the received pilot sequence.

2. Method for Channel State Information estimation according to claim 1, wherein the precoding vectors for each sub-array are generated such that the beams of the sub-arrays cover mutually exclusive areas.

3. Method for Channel State Information estimation according to claim 1 or 2, wherein the sub-arrays arranged such that the minimum distance between any two antenna elements of one sub-array is maximized.

4. Method for Channel State Information estimation according to one of claims 1 to 3, further comprising the step:

   - extrapolate the received Channel State Information for at least one antenna sub-array to the Large Scalable Antenna System (4) by exploiting the a priori information about the channel properties between antenna elements (5) of the Large Scalable Antenna System (4) and time shift information.

5. Method for Channel State Information estimation according to one of claims 1 to 4, the method further comprising the step:

   - obtaining a generic sub-array pattern by combining the estimated sub-array Channel State Information with the antenna array geometry, and
   - generating enhanced Channel State Information based on the sub-array pattern and beam-patterns.

6. Method for Channel State Information estimation according to one of claims 1 to 4, the method further comprising the step:

   - project the sub-array Channel State Information estimates over the space spanned by the antenna elements 5 of the Large Scalable Antenna System 4,
   - perform Eigen decomposition of a matrix generated in the projection step, and
   - generating enhanced Channel State Information by cross-correlating the Eigen decomposition with the pilot signals.

7. Method for Channel State Information estimation according to one of claims 1 to 6, wherein sub-antenna arrays and precoding vectors are arranged such that multiple orthogonal antenna beams pointing in different directions are generated.

**8.** Method for Channel State Information estimation according to one of claims 1 to 7, wherein the method is performed in a Large Scalable Antenna System base station providing backhaul services to a Small Cell network and the Channel State Information describes the channel state between the Large Scalable Antenna System base station and at least one Small Cell (6).

**9.** Base station (1) for wireless communication, comprising:

- a Large Scalable Antenna System (4) comprising multiple antenna elements (5), the antenna elements (5) being arranged in sub-arrays such that the antenna elements are divided into mutually exclusive subsets;
- a precoder for generating precoding vectors for each sub-array such that the antenna beams of the sub-arrays point to different directions,
- a receiver (2) for receiving at least one uplink pilot sequence by at least one antenna sub-array, and
- a processor (3) for estimating Channel State Information for at least one sub-array from the received pilot sequence.

**10.** Base station (1) according to claim 9, wherein the sub-arrays arranged such that the minimum distance between any two antenna elements (5) of one sub-array is maximized.

**11.** Base station (1) according to claim 9 or 10, wherein the processor is further for extrapolating the received Channel State Information for at least one antenna sub-array to the Large Scalable Antenna System (4) by exploiting a priori information about the channel properties between antenna elements of the Large Scalable Antenna System (4) and time shift information.

**12.** Base station (1) according to one of claims 9 to 11, wherein the processor is further for obtaining a generic sub-array pattern by combining the estimated sub-array Channel State Information with the antenna array geometry.

**13.** Base station (1) according to one of claims 9 to 11, wherein the processor is further for projecting the sub-array Channel State Information estimates over the space spanned by the antenna elements (5) of the Large Scalable Antenna System (4), and for
performing Eigen decomposition of a matrix generated in the projection step, and for
generating enhanced Channel State Information by cross-correlating the Eigen decomposition with the pilot signals.

**14.** Base station (1) according to one of claims 9 to 13, wherein the Base station provides backhaul services to a Small Cell network and the Channel State Information describes the channel state between the Large Scalable Antenna System base station and at least one Small Cell.

**15.** Small Cell communication network, comprising:

- at least one Small Cell (6), and
- at least one base station (1) providing backhaul services to the at least one Small Cell (6), wherein the base station is a base station according to one of claims 9-14.

**Patentansprüche**

**1.** Verfahren zur Kanalzustandsinformationseinschätzung in einem drahtlosen Netzwerk, wobei das drahtlose Netzwerk mindestens eine Basisstation (1) aufweist, wobei die mindestens eine Basisstation (1) ein großes skalierbares Antennensystem (4) aufweist, das mehrfache Antennenelemente (5) aufweist, wobei das Verfahren die folgenden Schritte aufweist:

- Aufteilen der Antennenelemente (5) des großen skalierbaren Antennensystems (4) in Untergruppen, sodass die Antennenelemente in sich wechselseitig ausschließende Teilsätze aufgeteilt sind;
- Erzeugen von Vorcodierungsvektoren für jede Untergruppe, sodass die Antennenstrahlen der Untergruppen in verschiedene Richtungen zeigen,
- Empfangen von mindestens einer Uplink-Pilotsequenz durch mindestens eine Antennenuntergruppe, und
- Schätzen einer Kanalzustandsinformation für die mindestens eine Antennenuntergruppe auf Grundlage der empfangenen Pilotsequenz.

**2.** Verfahren zur Kanalzustandsinformationseinschätzung nach Anspruch 1, wobei die Vorcodierungsvektoren für jede Untergruppe derart erzeugt werden, dass die Strahlen der Untergruppen sich wechselseitig ausschließende Bereiche abdecken.

**3.** Verfahren zur Kanalzustandsinformationseinschätzung nach einem der Ansprüche 1 oder 2, wobei die Untergruppen derart angeordnet sind, dass der Minimalabstand zwischen jeglichen zwei Antennenelementen einer Untergruppe maximiert ist.

**4.** Verfahren zur Kanalzustandsinformationseinschätzung nach einem der Ansprüche 1 bis 3, ferner aufweisend den folgenden Schritt:

- Extrapolieren der empfangenen Kanalzustandsinformation für mindestens eine Antennenuntergruppe zum großen skalierbaren Antennensystem (4) durch Verwerten der A-Priori-Information über die Kanaleigenschaften zwischen Antennenelementen (5) des großen skalierbaren Antennensystems (4) und Zeitverschiebungsinformation.

**5.** Verfahren zur Kanalzustandsinformationseinschätzung nach einem der Ansprüche 1 bis 4, wobei das Verfahren ferner den folgenden Schritt aufweist:

- Erhalten eines generischen Untergruppenmusters durch Kombinieren der geschätzten Untergruppen-Kanalzustandsinformation mit der Antennengruppengeometrie, und
- Erstellen von erweiterter Kanalzustandsinformation auf Grundlage des Untergruppenmusters und der Strahlenmuster.

**6.** Verfahren zur Kanalzustandsinformationseinschätzung nach einem der Ansprüche 1 bis 4, wobei das Verfahren ferner den folgenden Schritt aufweist:

- Projizieren der Untergruppen-Kanalzustandsinformationseinschätzungen über den Raum hinweg, der durch die Antennenelemente 5 des großen skalierbaren Antennensystems 4 überspannt wird,
- Ausführen von Eigendekomposition einer Matrix, die im Projektionsschritt erzeugt wird, und
- Erstellen von erweiterter Kanalzustandsinformation durch Kreuzkorrelieren der Eigendekomposition mit den Pilotsignalen.

**7.** Verfahren zur Kanalzustandsinformationseinschätzung nach einem der Ansprüche 1 bis 6, wobei Antennenuntergruppen und Vorcodierungsvektoren derart angeordnet werden, dass mehrfache orthogonale Antennenstrahlen, die in verschiedene Richtungen zeigen, erzeugt werden.

**8.** Verfahren zur Kanalzustandsinformationseinschätzung nach einem der Ansprüche 1 bis 7, wobei das Verfahren in einer Basisstation eines großen skalierbaren Antennensystems ausgeführt wird, die Backhaul-Dienste für ein Kleinzellennetzwerk vorsieht, und die Kanalzustandsinformation den Kanalzustand zwischen der Basisstation des großen skalierbaren Antennensystems und mindestens einer Kleinzelle (6) beschreibt.

**9.** Basisstation (1) für drahtlose Kommunikation, aufweisend:

- ein großes skalierbares Antennensystem (4), das mehrfache Antennenelemente (5) aufweist, wobei die Antennenelemente (5) in Untergruppen angeordnet sind, sodass die Antennenelemente in sich wechselseitig ausschließende Teilsätze aufgeteilt sind;
- einen Vorcodierer zum Erzeugen von Vorcodierungsvektoren für jede Untergruppe, sodass die Antennenstrahlen der Untergruppen in verschiedene Richtungen zeigen,
- einen Empfänger (2) zum Empfangen von mindestens einer Uplink-Pilotsequenz durch mindestens eine Antennenuntergruppe, und
- einen Prozessor (3) zum Schätzen einer Kanalzustandsinformation für mindestens eine Untergruppe aus der empfangenen Pilotsequenz.

**10.** Basisstation (1) nach Anspruch 9, wobei die Untergruppen derart angeordnet sind, dass der Minimalabstand zwischen jeglichen zwei Antennenelementen (5) einer Untergruppe maximiert ist.

**11.** Basisstation (1) nach einem der Ansprüche 9 oder 10, wobei der Prozessor ferner dem Extrapolieren der empfangenen Kanalzustandsinformation für mindestens eine Antennenuntergruppe zum großen skalierbaren Antennensystem (4) durch Verwerten von A-Priori-Information über die Kanaleigenschaften zwischen Antennenelementen des großen skalierbaren Antennensystems (4) und Zeitverschiebungsinformation dient.

**12.** Basisstation (1) nach einem der Ansprüche 9 bis 11, wobei der Prozessor ferner dem Erhalten eines generischen Untergruppenmusters durch Kombinieren der geschätzten Untergruppen-Kanalzustandsinformation mit der Antennengruppengeometrie dient.

**13.** Basisstation (1) nach einem der Ansprüche 9 bis 11, wobei der Prozessor ferner dem Projizieren der Untergruppen-Kanalzustandsinformationseinschätzungen über den Raum hinweg, der durch die Antennenelemente (5) des großen skalierbaren Antennensystems (4) überspannt wird, und dem
Ausführen von Eigendekomposition einer Matrix, die im Projektionsschritt erzeugt wird, und dem Erstellen von erweiterter Kanalzustandsinformation durch Kreuzkorrelieren der Eigendekomposition mit den Pilotsignalen dient.

**14.** Basisstation (1) nach einem der Ansprüche 9 bis 13, wobei die Basisstation Backhaul-Dienste für ein Kleinzellennetzwerk vorsieht und die Kanalzustandsinformation den Kanalzustand zwischen der Basisstation des großen skalierbaren Antennensystems und mindestens einer Kleinzelle beschreibt.

**15.** Kleinzellenkommunikationsnetzwerk, aufweisend:

- mindestens eine Kleinzelle (6), und
- mindestens eine Basisstation (1), die Backhaul-Dienste für die mindestens eine Kleinzelle (6) vorsieht, wobei die Basisstation eine Basisstation nach einem der Ansprüche 9 bis 14 ist.

## Revendications

**1.** Procédé pour une estimation d'informations d'état de canal dans un réseau sans fil, le réseau sans fil comprenant au moins une station de base (1), la ou les stations de base (1) comprenant un grand système d'antenne évolutif (4) comprenant de multiples éléments d'antenne (5), le procédé comprenant les étapes consistant :

- à partager les éléments d'antenne (5) du grand système d'antenne évolutif (4) en sous-réseaux de telle sorte que les éléments d'antenne soient divisés en sous-ensembles mutuellement exclusifs ;
- à générer des vecteurs de précodage pour chaque sous-ensemble de telle sorte que les faisceaux d'antenne des sous-ensembles soient dirigés dans des directions différentes,
- à recevoir au moins une séquence pilote de liaison montante au moyen d'au moins un sous-réseau d'antennes et
- à estimer une information d'état de canal pour le ou les sous-réseaux d'antennes en se basant sur la séquence pilote reçue.

**2.** Procédé pour une estimation d'informations d'état de canal selon la revendication 1, dans lequel les vecteurs de précodage pour chaque sous-réseau sont générés de telle sorte que les faisceaux des sous-ensembles recouvrent des zones mutuellement exclusives.

**3.** Procédé pour une estimation d'informations d'état de canal selon la revendication 1 ou 2, dans lequel les sous-réseaux sont agencés de telle sorte que la distance minimale entre deux éléments d'antenne quelconques d'un sous-réseau soit maximisée.

**4.** Procédé pour une estimation d'informations d'état de canal selon l'une des revendications 1 à 3, comprenant en outre l'étape consistant :

- à extrapoler les informations d'état de canal reçues pour au moins un sous-réseau d'antennes au grand système d'antenne évolutif (4) en exploitant les informations a priori concernant les propriétés de canal entre des éléments d'antenne (5) du grand système d'antenne évolutif (4) et des informations de décalage temporel.

**5.** Procédé pour une estimation d'informations d'état de canal selon l'une des revendications 1 à 4, le procédé comprenant en outre l'étape consistant :

- à obtenir un motif de sous-ensemble générique en combinant les informations d'état de canal de sous-réseau estimées avec la géométrie du réseau d'antennes, et
- à générer des informations d'état de canal améliorées en se basant sur le motif de sous-réseau et des motifs de faisceau.

**6.** Procédé pour une estimation d'informations d'état de canal selon l'une des revendications 1 à 4, le procédé comprenant l'étape consistant :

- à projeter les estimations d'informations d'état de canal de sous-réseau sur l'espace défini par les éléments d'antenne (5) du grand système d'antenne évolutif (4),
- à effectuer une décomposition en valeurs propres d'une matrice générée au cours de l'étape de projection, et
- à générer des informations d'état de canal améliorées par corrélation croisée de la décomposition en valeurs propres avec les signaux pilotes.

**7.** Procédé pour une estimation d'informations d'état de canal selon l'une des revendications 1 à 6, dans lequel des réseaux d'antennes auxiliaires et des vecteurs de précodage sont disposés de telle sorte que de multiples faisceaux d'antenne orthogonaux pointant dans des directions différentes soient générés.

**8.** Procédé pour une estimation d'informations d'état de canal selon l'une des revendications 1 à 7, dans lequel le procédé est réalisé dans une station de base de grand système d'antenne évolutif offrant des services de liaison terrestre à un réseau de petite cellule et les informations d'état de canal décrivent l'état de canal entre la station de base de grand système d'antenne évolutif et au moins une petite cellule (6).

**9.** Station de base (1) pour une communication sans fil, comprenant :

- un grand système d'antenne évolutif (4) comprenant de multiples éléments d'antenne (5), les éléments d'antenne (5) étant disposés dans des sous-réseaux de telle sorte que les éléments d'antenne soient divisés en sous-ensembles mutuellement exclusifs ;
- un précodeur pour générer des vecteurs de précodage pour chaque sous-ensemble de telle sorte que les faisceaux d'antenne des sous-ensembles soient dirigés dans des directions différentes,
- un récepteur (2) pour recevoir au moins une séquence pilote de liaison montante au moyen d'au moins un sous-réseau d'antennes et
- un processeur (3) pour estimer des informations d'état de canal pour au moins un sous-réseau à partir de la séquence pilote reçue.

**10.** Station de base (1) selon la revendication 9, dans laquelle les sous-réseaux sont agencés de telle sorte que la distance minimale entre deux éléments d'antenne quelconques (5) d'un sous-réseau soit maximisée.

**11.** Station de base (1) selon la revendication 9 ou 10, dans laquelle le processeur est en outre destiné à extrapoler les informations d'état de canal reçues pour au moins un sous-réseau d'antennes au grand système d'antenne évolutif (4) en exploitant des informations a priori concernant les propriétés de canal entre des éléments d'antenne du grand système d'antenne évolutif (4) et des informations de décalage temporel.

**12.** Station de base (1) selon l'une des revendications 9 à 11, dans laquelle le processeur est en outre destiné à obtenir un motif de sous-ensemble générique en combinant les informations d'état de canal de sous-réseau estimées avec la géométrie du réseau d'antennes.

**13.** Station de base (1) selon l'une des revendications 9 à 11, dans laquelle le processeur est en outre destiné à projeter les estimations d'informations d'état de canal de sous-réseau sur l'espace défini par les éléments d'antenne (5) du grand système d'antenne évolutif (4), et
à effectuer une décomposition en valeurs propres d'une matrice générée au cours de l'étape de projection, et
à générer des informations d'état de canal améliorées par corrélation croisée de la décomposition en valeurs propres avec les signaux pilotes.

**14.** Station de base (1) selon l'une des revendications 9 à 13, dans laquelle la station de base offre des services de liaison terrestre à un réseau de petite cellule et les informations d'état de canal décrivent l'état de canal entre la station de base de grand système d'antenne évolutif et au moins une petite cellule.

**15.** Réseau de communication de petite cellule comprenant :

- au moins une petite cellule (6) et
- au moins une station de base (1) offrant des services de liaison terrestre à la ou aux petites cellules (6), dans lequel la station de base est une station de base selon l'une des revendications 9 à 14.

## Fig. 1

## Fig. 2

# Fig. 3

## Fig. 4

## Fig. 5

# Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. YIN ; D. GESBERT ; M. FILIPPOU ; Y. LIU.** A co-ordinated approach to channel estimation in large-scale multiple-antenna systems. *IEEE J. Sel. Areas Commun.,* February 2013, vol. 31 (2), 264-273
- **R. MÜLLER ; M. VEHKAPERÄ ; L. COTTATEL-LUCCI.** Blind pilot decontamination. *Proc. of ITG Workshop on Smart Antennas,* March 2013
- **H. Q. NGO ; E. G. LARSSON.** EVD-based channel estimations for multi-cell multiuser MIMO with very large antenna arrays. *Proceedings of the IEEE International Conference on Acoustics, Speed and Signal Processing (ICASSP),* March 2012
- **A. ASHIKHMIN ; T. L. MARZETTA.** Pilot contamination pre-coding in multi-cell large scale antenna systems. *IEEE International Symposium on Information Theory (ISIT),* July 2012
- **WANG et al.** A spatial domain based method against pilot contamination for multi-cell massive MIMO systems. *8th International Conference on Communications and Networking in China,* 2013